# EUROPEAN PATENT APPLICATION

(11) **EP 4 340 131 A1**
(43) Date of publication of application: **20.03.2024**
(21) Application number: 22807362.3
(22) Date of filing: 27.04.2022
(51) Int. Cl.: H01Q 19/10, H01Q 3/26

(54) **REFLECTOR SYSTEM, ACTIVE REFLECTOR, AND ACTIVE REFLECTOR ARRANGEMENT METHOD**

(30) Priority: 13.05.2021 JP 2021081556
(71) Applicant: AGC INC., Chiyoda-ku, Tokyo 1008405 (JP)
(72) Inventor: TAKAHASHI, Kouichirou, Tokyo 100-8405 (JP); KAGAYA, Osamu, Tokyo 100-8405 (JP); KUMAGAI, Akira, Tokyo 100-8405 (JP); NAGAE, Shimpei, Tokyo 100-8405 (JP)
(74) Representative: Müller-Boré & Partner Patentanwälte PartG mbB
(86) International application number: PCT/JP2022/019172
(87) International publication number: WO 2022/239660

(57) **Abstract**

A reflector system, an active reflector, and a method of positioning an active reflector are provided, whereby dead zones can be cancelled efficiently. The reflector system includes: a first active reflector having a first reflecting surface configured to reflect, at a variable reflecting angle, radio waves transmitted from a transmitter, at least a part of the first reflecting surface being in a boundary area located at a boundary between a line-of-sight area and a non-line-of-sight area formed by one or more obstacles that block the radio waves from the transmitter; and a second active reflector having a second reflecting surface configured to reflect, at a variable reflecting angle, the radio waves from the transmitter or the radio waves reflected by the first active reflector, the second reflecting surface being provided in the non-line-of-sight area, or at least a part of the second reflecting surface being provided in the boundary area.

## Description

### TECHNICAL FIELD

The present invention relates to a reflector system, an active reflector, and a method of positioning an active reflector.

### BACKGROUND ART

There has heretofore been a radio communication system including a phase control reflector that reflects radio signals from a radio base station or a terminal. This radio communication system includes a first propagation channel information acquiring part that is configured to acquire first propagation channel information between the radio base station and the phase control reflector, and a second propagation channel information acquiring part that is configured to acquire second propagation channel information between the phase control reflector and the terminal, and, in this radio communication system, and the phase control reflector controls the phase of the radio signals to reflect toward the terminal or the radio base station based on the first propagation channel information and the second propagation channel information (see, for example, patent document 1).

### RELATED-ART DOCUMENT

### PATENT DOCUMENT

Patent Document 1: International Publication No. WO2021/024611

### SUMMARY OF THE INVENTION

### PROBLEM TO BE SOLVED BY THE INVENTION

Now, in an environment in which, for example, a radio base station, a terminal, a phase control reflector, and so forth are positioned, there are also obstacles that block radio waves such as radio signals, and therefore there are line-of-sight areas that can be seen from the radio base station, and non-line-of-sight areas that cannot be seen from the radio base station. In an environment where line-of-sight areas and non-line-of-sight areas coexist thus, where to position the phase control reflector is an extremely important issue. This is because the degree of cancellation of dead zones where radio waves cannot reach varies significantly depending on the location of the phase control reflector.

However, conventional radio communication systems do not give much thought to the location where the phase control reflector is positioned, and there is no particular disclosure relating to that.

One purpose of the present invention is therefore to provide a reflector system, an active reflector, and a method of positioning an active reflector, whereby dead zones can be cancelled efficiently.

### MEANS FOR SOLVING THE PROBLEM

According to at least one embodiment of the present invention, a reflector system includes: a first active reflector having a first reflecting surface that is configured to reflect, at a variable reflecting angle, radio waves transmitted from a transmitter, at least a part of the first reflecting surface being provided in a boundary area located at a boundary between a line-of-sight area and a non-line-of-sight area that are formed by one or more obstacles that block the radio waves transmitted from the transmitter; and a second active reflector having a second reflecting surface that is configured to reflect, at a variable reflecting angle, the radio waves transmitted from the transmitter or the radio waves reflected by the first active reflector, the second reflecting surface being provided in the non-line-of-sight area, or at least a part of the second reflecting surface being provided in the boundary area.

### ADVANTAGEOUS EFFECTS OF THE INVENTION

The present invention can therefore provide a reflector system, an active reflector, and a method of positioning an active reflector, whereby dead zones can be cancelled efficiently.

### BRIEF DESCRIPTION OF THE DRAWINGS

FIG. 1 is a diagram that illustrates a simulation model of an area 1;
FIG. 2 is a diagram for explaining line-of-sight areas, non-line-of-sight areas, and dead zones;
FIG. 3 is a diagram that illustrates an example of antenna units 11 and 12 of an antenna set of a radio base station 10;
FIG. 4 is a diagram that illustrates an example of reflect-array antennas of an active reflector 110;
FIG. 5 is a diagram that illustrates an example circuit structures of an active reflector 110;
FIG. 6 is a diagram that illustrates a result of a first simulation;
FIG. 7 is a diagram that illustrates a result of the first simulation;
FIG. 8 is a diagram that illustrates a result of a second simulation;
FIG. 9 is a diagram that illustrates the locations of a reflecting surface 111 of the active reflector 110 in a third simulation;
FIG. 10 is a diagram that illustrates a result of the third simulation;
FIG. 11 is a diagram that illustrates a result of a fourth simulation;
FIG. 12 is a diagram that illustrates simulation models;
FIG. 13 is a diagram that illustrates simulation models; and
FIG. 14 is a diagram that illustrates a result of a fifth simulation.

### EMBODIMENT FOR CARRYING OUT THE INVENTION

### <Embodiment>

Hereinafter, an embodiment to which the reflector system, the active reflector, and the method of positioning an active reflector of the present disclosure are applied will be described. The following description will be explained using an XYZ coordinate system. The direction parallel to the X axis (X direction), the direction parallel to the Y axis (Y direction), and the direction parallel to the Z axis (Z direction) are orthogonal to each other. Also, hereinafter, for ease of explanation, the -Z direction side may be referred to as the "lower side," "lower," "below," and so forth, and the +Z direction side may be referred to as the "upper side," "upper," "above," and so forth. Also, "plan view" refers to the XY-plane view. Also, in the following description, the length, thickness, breadth, and so forth of parts may be exaggerated so as to make their structure more understandable. Also, words such as "parallel," "perpendicular," "orthogonal," "horizontal," "perpendicular," "vertical" and so forth allow deviations to the extent that the effects of the embodiments are not impaired.

### <Simulation model of area 1 and reflector system 100>

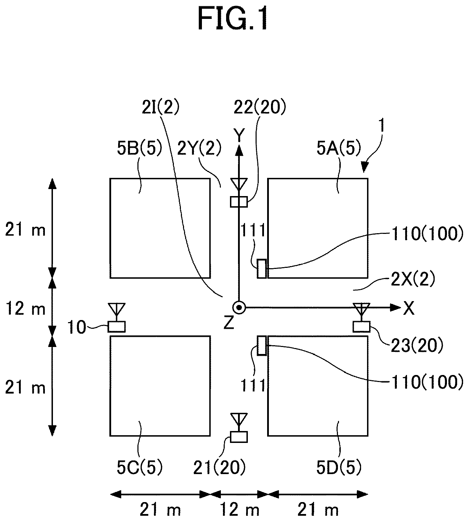

FIG. 1 is a diagram that illustrates a simulation model of an area 1. FIG. 1 shows, as an example, a state in which a reflector system 100 of the embodiment is positioned in the area 1. The reflector system 100 includes two active reflectors 110 in one example. Each active reflector 110 has a reflecting surface 111. One of the two active reflectors 110 is an example of a first active reflector, and its reflecting surface 111 is an example of a first reflecting surface. The other active reflector 110 is an example of a second active reflector, and its reflecting surface 111 is an example of a second reflecting surface.

The area 1 is, for example, a rectangular area, and includes cross-shaped roads 2, and buildings 5A to 5D that are built along the roads 2. The area 1 has no ceiling, and there is nothing in the area 1 other than what is described here. The buildings 5A to 5D are examples of obstacles that block radio waves. The roads 2 can be divided into an intersection 2I, two roads 2X that extend in ±X directions from the intersection 2I, and two roads 2Y that extend in ±Y directions from the intersection 2I. When drawing no particular distinction between the intersection 2I, the roads 2X, and the roads 2Y, or when referring to all of the intersection 2I, the roads 2X, and the roads 2Y, they are simply referred to as "road(s) 2." Also, in some examples, the center of the intersection 2I on the ground surface of the cross-shaped roads 2 is set as the origin of the XYZ coordinates. The roads 2 are flat and parallel to the XY plane. Therefore, the Z coordinate of the roads 2 is Z = 0 at all locations.

For example, the buildings 5A to 5D are square in plan view, and positioned so as to surround the cross-shaped roads 2. Assume that the buildings 5A to 5D are sufficiently high (for example, approximately 30 meters (m) high) and have a uniform shape in plan view up to the rooftop. According to an example, the width of the roads 2X in the Y direction and the width of the roads 2Y in the X direction are 12 m, and the buildings 5A to 5D are all 21 m wide in the X and Y directions.

In the area 1, one radio base station 10 and three receivers 21 to 23 are positioned. The radio base station 10 is an example of a transmitter. As an example, the radio base station 10 is positioned at the -X end of the roads 2X. The coordinates of the radio base station 10 are (X, Y, Z) = (-26, 0, 1.5). The height of the radio base station 10 is, for example, 1.5 m above the ground. The radio base station 10 includes, for example, an antenna set including a group of antenna units that transmit streams by using the distributed multiple input, multiple output (MIMO) method. Although this antenna set will be described later in detail, here, the coordinates of the center of gravity of the antenna unit group will be explained as the coordinates of the radio base station 10.

The receiver 21 is positioned at the -Y end of the roads 2Y, the receiver 22 is positioned at the +Y end of the roads 2Y, and the receiver 23 is positioned at the +X end of the roads 2X. The coordinates of the receiver 21 are (X, Y, Z) = (0, - 26, 1.5), the coordinates of the receiver 22 are (X, Y, Z) = (0, 26, 1.5), and the coordinates of the receiver 23 are (X, Y, Z) = (26, 0, 1.5). Therefore, while the receiver 23 can be seen from the radio base station 10, the receivers 21 and 22 are blocked by the buildings 5B and 5C and cannot be seen directly from the radio base station 10. The height at which the receivers 21 to 23 are positioned is, for example, 1.5 m above the ground, which is equal to the height at which the radio base station 10 is positioned. Note that, unless the receivers 21 to 23 are particularly distinguished, they are simply referred to as "receiver(s) 20."

The active reflector 110 in the +Y direction is attached to the -Y end of the -X outer wall of the building 5A, and directed toward the radio base station 10 at the location closest to the intersection 2I of the roads 2Y. The active reflector 110 in the -Y direction is attached to the +Y end of the -X outer wall of the building 5D, and directed toward the radio base station 10 at the location closest to the intersection 2I of the roads 2. The height at which the two active reflectors 110 are positioned is, for example, 1.5 m above the ground.

Each active reflector 110 is positioned such that its reflecting surface 111 is directed toward the radio base station 10. Here, to say that the reflecting surface 111 is directed toward the radio base station 10 means that a straight line can be drawn from the reflecting surface 111 to the antennas of the radio base station 10 without being blocked by obstacles such as the buildings 5. This straight line is the shortest ray path.

The radio waves radiated from the antennas of the radio base station 10 are reflected by, for example, the outer walls of the buildings 5A to 5D. However, "dead zones," which refer to areas where the radio waves cannot reach, may be formed in locations that cannot be seen from the radio base station 10, such as the locations of the receivers 21 and 22, and so the active reflectors 110 are provided to make it possible to receive the radio waves even in locations where dead zones may be formed. To be more specific, a dead zone refers to an area where the intensity of radio waves is lower than the level needed for the receiving operation in the receivers 21 and 22.

### <Line-of-sight areas, non-line-of-sight areas, and dead zones>

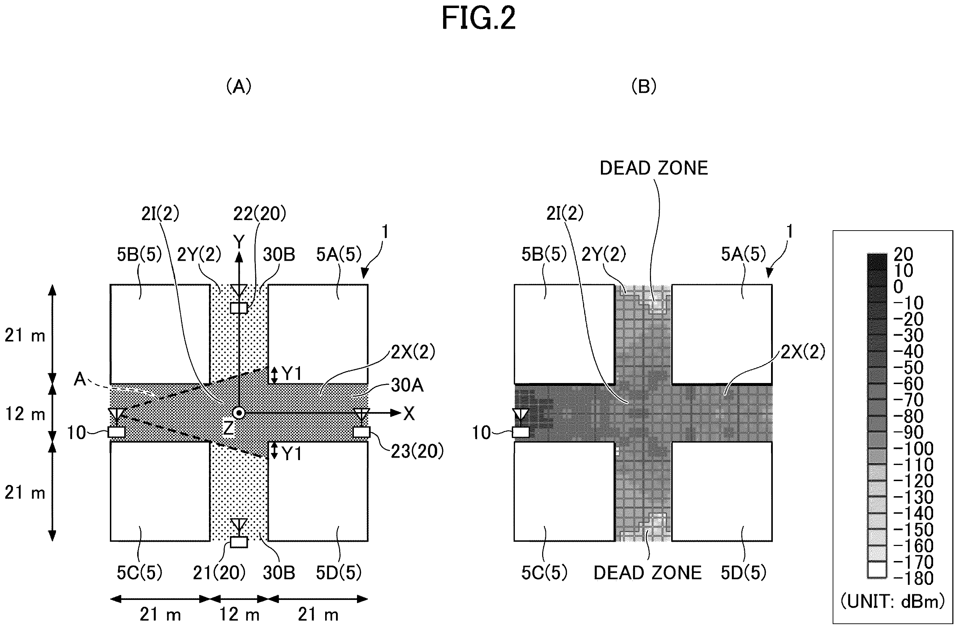

FIG. 2 is a diagram that illustrates line-of-sight areas, non-line-of-sight areas, and dead zones. (A) in FIG. 2 shows a line-of-sight area 30A and non-line-of-sight area 30B, and FIG. (B) in 2 shows dead zones. In (A) of FIG. 2, the active reflector 110 is omitted, and (B) of FIG. 2 shows the area 1, the roads 2, the buildings 5A to 5D, the dead zones, and the distribution of radio wave intensity.

As shown in (A) of FIG. 2, the line-of-sight area 30A indicated by dense dots is an area that can be seen from the antennas of the radio base station 10, and is also referred to as an "LOS (Line-Of-Sight) area." The non-line-of-sight areas 30B are parts of the roads 2 excluding the line-of-sight area 30A, as shown by the dots of low density, and are also referred to as "NLOS (Non-Line-Of-Sight) areas." The area (line-of-sight area 30A) that can be seen from the antennas of the radio base station 10 is the part consisting of the intersection 2I, the two roads 2X, and parts of the two roads 2Y that are closer to the intersection 2I than the two broken lines A. The two broken lines A are located on straight lines that connect between the antennas of the radio base station 10 and the corners of the buildings 5B and 5C facing the intersection 2I. In the line-of-sight area 30A, the parts of the two roads 2Y that are closer to the intersection 2I than the two broken lines A face parts of the buildings 5A and 5D up to Y1 (m) from the corners of the -X outer walls of the buildings 5A and 5D facing the intersection 2I. Y1 is 3.6 m.

Also, as can be seen from the distribution of radio wave intensity (dBm) shown in (B) of FIG. 2, dead zones where the radio waves radiated from the antennas of the radio base station 10 do not reach are formed at the ±Y ends of the two roads 2Y. Radio waves radiated from the antennas of the radio base station 10 directly reach the line-of-sight area 30A, but are reflected by the outer walls of the buildings 5A to 5D in the non-line-of-sight areas 30B. Therefore, the non-line-of-sight areas 30B are divided into areas where the radio waves can reach and dead zones where the radio waves cannot reach. Note that the distribution of radio wave intensity (dBm) shown in (B) of FIG. 2 is a distribution over varying locations in the roads 2 when radio waves with a power of 25 dBm are radiated from the antennas of the radio base station 10.

### <Radio base station 10>

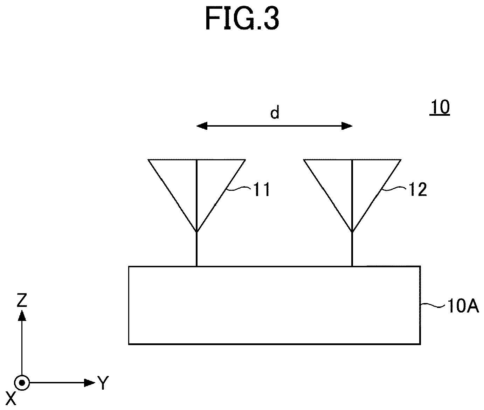

FIG. 3 is a diagram that illustrates an example of antenna units 11 and 12 of the antenna set of the radio base station 10. The radio base station 10 has a body part 10A and antenna units 11 and 12. The antenna units 11 and 12 constitute an antenna unit group. The antenna units 11 and 12 are positioned in the Y direction at an interval d, for example, in order to transmit streams by using distributed MIMO.

The antenna units 11 and 12 are devices that transmit and receive high-frequency radio waves (for example, 0.3 GHz to 300 GHz) such as microwaves including millimeter waves. The antenna units 11 and 12 are configured such that radio waves that are compatible with, for example, fifth generation mobile communication systems (commonly referred to as "5G"), wireless communication standards such as Bluetooth (registered trademark), and wireless LAN (Local Area Network) standards such as IEEE802.11ac can be transmitted and received. The antenna units 11 and 12 may also be configured to transmit and receive electromagnetic waves that comply with standards other than the ones given above, or may be configured to transmit and receive electromagnetic waves of multiple varying frequencies. Below, examples in which the antenna units 11 and 12 transmit and receive radio waves compatible with 5G standards will be described. The radio waves emitted from the antenna units 11 and 12 propagate as one beam by means of beamforming.

Also, although examples will be described here in which the radio base station 10 has two antenna units 11 and 12, and it is sufficient to have at least two antenna units to implement distributed MIMO, and having three or more antenna units is also possible. Alternatively, for example, distributed MIMO may be implemented by using two or more radio base stations 10 that each have one antenna unit.

Distributed MIMO requires that multiple antenna units that transmit streams be installed a certain distance apart; so the antenna units 11 and 12 are spaced apart from each other by a distance d. The height at which the antenna units 11 and 12 are installed may be defined as the height from one reference plane (here, the surface of the roads 2) that is parallel to the horizontal plane. For example, when an antenna unit that radiates radio waves outdoors is installed outdoors, the height at which this antenna unit is installed may be defined as the height from the ground outdoors. In the example here, the height of the antenna units 11 and 12 in the Z-axis direction from the surface (ground) of the roads 2 is set to 1.5 m.

### <Receiver 20>

The receiver 20 may be a radio base station like the radio base station 10, or may be a terminal device such as a smartphone or a tablet computer of a user who uses 5G communication. When the receiver 20 is a radio base station, it is preferable if it is capable of distributed MIMO communication like the radio base station 10. If the receiver 20 is a radio base station like the radio base station 10, the coordinates of the center of gravity of the antenna unit group may be the coordinates of the receiver 20.

### <Active reflector 110>

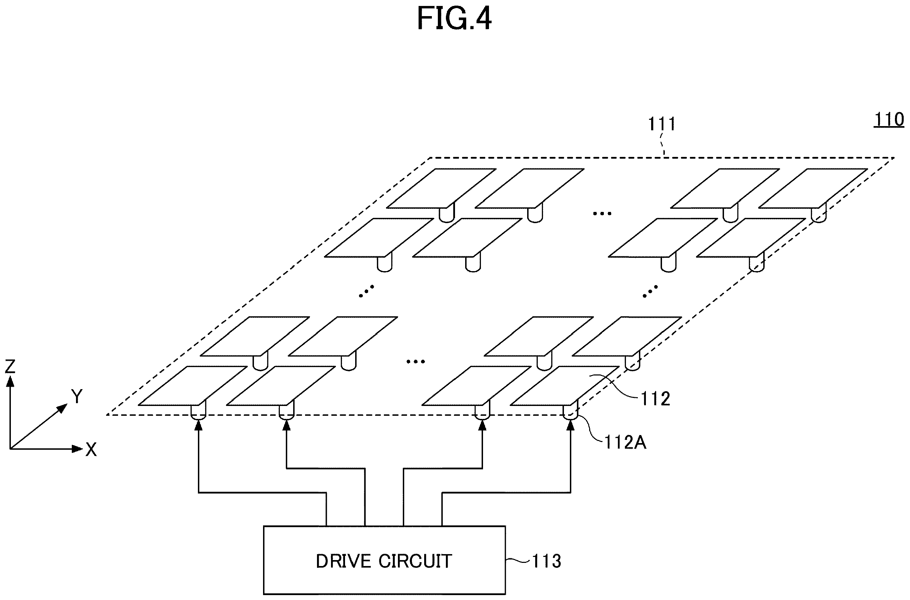

FIG. 4 is a diagram that illustrates an example structure of an active reflector 110. An active reflector 110 is, for example, a reflect-array antenna having multiple reflecting elements 112 aligned in an array (matrix). The multiple reflecting elements 112 are located on one reflecting surface 111 that is parallel to the XY plane.

The reflecting elements 112 have a rectangular shape in plan view, and are aligned on the surface of an insulating layer or the like (not shown). These reflecting elements 112 can be made by patterning a metal foil of copper, aluminum, and the like, provided on the surface of the insulating layer or the like. For example, the reflecting elements 112 are aligned at equal intervals in the X direction and the Y direction.

Each reflecting element 112 has a via 112A that extends from the center of the surface underneath the reflecting element 112, and penetrates the insulating layer. That is, each reflecting element 112 has a mushroom-like shape, for example. The via 112A of each reflecting element 112 is provided with a P-intrinsic-N (PIN) diode or a variable capacitor for radio frequencies (RF). The PIN diode or variable capacitor is provided in order to make it possible to change the electrical characteristics of the reflecting element 112, such as the potential or electrostatic capacitance, and is connected to a drive circuit 113, for example. The PIN diode is switched on/off according to drive signals output from the drive circuit 113. Also, the electrostatic capacitance of the variable capacitor is switched according to drive signals output from the drive circuit 113.

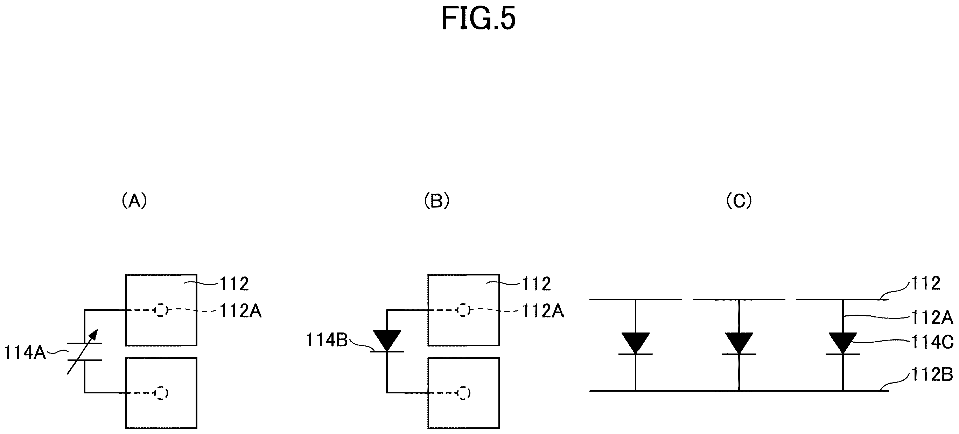

FIG. 5 is a diagram that illustrates an example circuit structure of the active reflector 110. (A) in FIG. 5 shows an example of a circuit in which a variable capacitor 114A is connected between the vias 112A of two reflecting elements 112. The electrostatic capacitance of the variable capacitor 114A is switched by drive signals output from the drive circuit 113. Although (A) of FIG. 5 shows only two reflecting elements 112, other reflecting elements 112 are also paired in twos and connected to respective variable capacitors 114A in the same way.

(B) in FIG. 5 shows an example of a circuit in which a PIN diode 114B is connected between the vias 112A of two reflecting elements 112. The PIN diode 114B is switched on/off by drive signals output from the drive circuit 113. Although (B) of FIG. 5 shows only two reflecting elements 112, other reflecting elements 112 are also paired in twos and connected to respective PIN diodes 114B in the same way.

(C) in FIG. 5 shows an example circuit in which a PIN diode 114C is connected in series between the via 112A of each reflecting element 112 and a ground layer 112B. The PIN diode 114C is switched on/off by drive signals output from the drive circuit 113. Although (C) of FIG. 5 shows only three reflecting elements 112, other reflecting elements 112 are similarly connected to respective PIN diodes 114C.

The active reflector 110 adjusts the phase when incident waves (beams) on neighboring reflecting elements 112 are reflected, by switching the electrical characteristics of each reflecting element 112 in accordance with drive signals output from the drive circuit 113, so that the active reflector 110 can change the reflecting angle of the beam formed with radio waves reflected by all the reflecting elements 112, in directions other than that of specular reflection.

At what reflecting angle and in what period the active reflector 110 reflects beams, which are incident waves, can be configured based on the pattern of drive signals that drive the variable capacitor 114A, PIN diode 114B, or PIN diode 114C connected to a corresponding reflecting element 112. For example, it is possible to form the drive circuit 113 with a microcomputer, and store the data representing the pattern of drive signals in the memory of the microcomputer, and control the drive circuit 113 to drive the variable capacitor 114A, the PIN diode 114B or the PIN diode 114C, based on the data representing the pattern of drive signals. Note that, although a case is described here in which the active reflector 110 has the reflecting elements 112 shown in FIG. 4 and FIG. 5, the active reflector 110 may be structured in any other ways than the one described above, insofar as it can reflect the beams transmitted from the radio base station 10 at any reflecting angles.

### <First simulation>

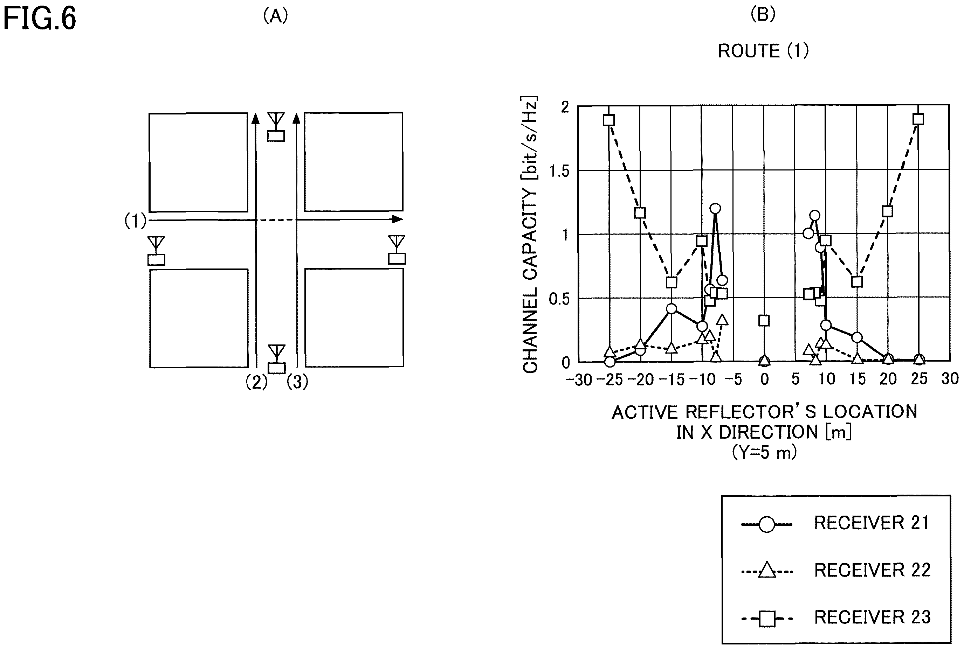

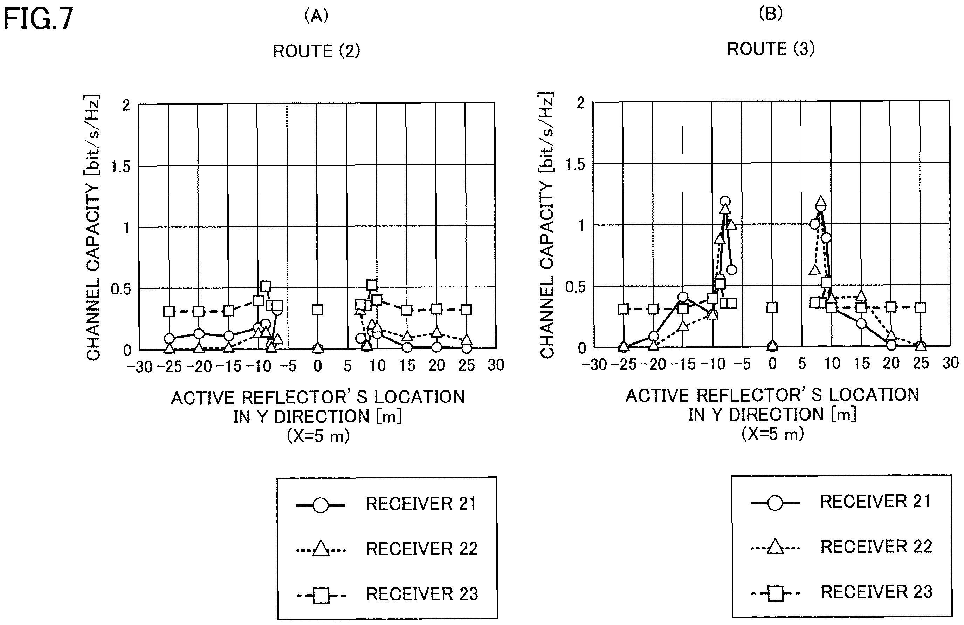

FIG. 6 and FIG. 7 are diagrams that show the results of a first simulation. (A) in FIG. 6 shows routes (1) to (3), in which the location of the active reflector 110 was changed in the simulation model for the area 1. (B) in FIG. 6, (A) in FIG. 7, and (B) in FIG. 7 show the channel capacities (bit/s/Hz) of receivers 21 to 23 when the location of the active reflector 110 was moved along routes (1) to (3), and the receivers 21 to 23 received the radio waves transmitted from the radio base station 10.

In one example here, the size of the reflecting surface 111 of the active reflector 110 was 300 millimeters (mm) in length and 300 mm in width, and the area was 0.09 square meters (m²). The location of the active reflector 110 was the location of the center of gravity of the reflecting surface 111. Also, the active reflector 110 shifted its reflecting angle at 1-degree intervals, within a range of ±90 degrees, with respect to the normal vector of the reflecting surface 111 in the XY-plane view.

Channel capacity here refers to the density of signals that can be multiplexed on a propagation channel of a certain frequency without producing interference. When the channel capacity is high, the communication speed increases if different pieces of information are transmitted from MIMO antennas, while, if the same information is transmitted from MIMO antennas, the signal-to-noise ratio (SN ratio) at the receiving end improves. Channel capacity is therefore an indicator of communication performance between MIMO antennas.

In route (1), the reflecting surface 111 of the active reflector 110 was directed in the -Y direction, and the location of the active reflector 110 was changed in the X direction from the coordinates (X, Y, Z) = (-25, 5, 1.5) to (25, 5, 1.5). In route (1), the active reflector 110 was located in the line-of-sight area 30A.

In route (2), the reflecting surface 111 of the active reflector 110 was directed in the +X direction, and the location of the active reflector 110 was changed in the Y direction from the coordinates (X, Y, Z) = (-5, -25, 1.5) to (-5, 25, 1.5). In route (2), the active reflector 110 was located in the non-line-of-sight areas 30B.

In route (3), the reflecting surface 111 of the active reflector 110 was directed in the -X direction, and the location of the active reflector 110 was changed in the Y direction from the coordinates (X, Y, Z) = (5, -25, 1.5) to (5, 25, 1.5). In route (3), the location of the active reflector 110 was changed along a straight line of X = 5 m. At locations where X = 5 m, the boundaries between the line-of-sight area 30A and the non-line-of-sight areas 30B were found at the locations of Y = 9.3 m and Y = -9.3 m, as indicated by broken lines in FIG. 1. Therefore, when route (3) was used, the active reflector 110 was located in the line-of-sight area 30A when the location in the Y direction was -9 m, - 8 m, -7 m, 7 m, 8 m, and 9 m.

Note that X = 0 m in (B) of FIG. 6 and Y = 0 m in (A) of FIG. 7 and (B) of FIG. 7 indicate the channel capacities of the receivers 21 to 23 upon receiving the radio waves while the active reflector 110 was not in the area 1. Since the channel capacities of the receivers 21 and 22 in the non-line-of-sight areas 30B were approximately zero when the active reflector 110 was not present in the area 1, the receivers 21 and 22 were located in dead zones.

As shown in (B) of FIG. 6, when the active reflector 110 was not present, the channel capacities of the receivers 21 and 22 were approximately zero. When the location of the active reflector 110 was moved along route (1), the channel capacities of the receivers 21 and 22 tended to be higher than the channel capacities when there was no active reflector 110, as the active reflector 110 moved closer to the intersection 2I. Note that the intersection 2I was located within a range of X = -6 m to 6 m. The reason that the receiver 21 had a higher channel capacity than the receiver 22 might be that the reflecting surface 111 of the active reflector 110 was directed in the -Y direction, and the number of reflected waves to reach the receiver 21, located in the non-line-of-sight area 30B that is deeper in the -Y direction than the intersection 2I, increased.

Also, as for the receiver 23 located in the line-of-sight area 30A, it was confirmed that its overall channel capacity tended to be higher than when the active reflector 110 was not present. This is likely to be because the number of reflected waves in the line-of-sight area 30A increased, which then resulted in an increase in the number of radio waves to reach the receiver 23.

Note that the reason that the channel capacity of the receiver 23 showed very high values when the active reflector 110 was located at X = -25 m and -20 m might be that, since the active reflector 110 was positioned near the radio base station 10, more of the radio waves emitted from the radio base station 10 were reflected by the active reflector 110 and incident on the receiver 23. Also, the reason that the channel capacity of the receiver 23 showed very high values when the active reflector 110 was located at X = 20 m and 25 m might be that, since the active reflector 110 was positioned near the radio base station 10, more of the radio waves emitted from the radio base station 10 were reflected by the active reflector 110 and incident on the receiver 23.

As shown in (A) of FIG. 7, when the active reflector 110 was moved along route (2), the channel capacities of the receivers 21 to 23 tended to be higher, when the location of the active reflector 110 in the Y direction was within ranges of -10 m to -7 m and 7 m to 10 m, than when there was no active reflector 110. Note that the intersection 2I was located within a range of Y = -6 m to 6 m.

The receiver 21 had higher channel capacities than the receiver 22 while the location of the active reflector 110 in the Y direction was between -10 m and -7 m, and this made it clear that more reflected waves reached the receiver 21 located nearer to the active reflector 110. Also, the receiver 22 had higher channel capacities than the receiver 21 while the location of the active reflector 110 in the Y direction was between 7 m and 10 m, and this made it clear that more reflected waves reached the receiver 22 located nearer to the active reflector 110.

Also, as for the receiver 23 located in the line-of-sight area 30A, it was confirmed that its channel capacity tended to be higher when the location of the active reflector 110 in the Y direction was within ranges of -10 m to -7 m and 7 m to 10 m than when no active reflector 110 was present. This is likely to be because the fact that the active reflector 110 was located near the intersection 2I resulted in an increase in the number of reflected waves in the line-of-sight area 30A and an increase in the number of radio waves to reach the receiver 23.

As shown in (B) of FIG. 7, when the active reflector 110 was moved along route (3), the channel capacities of the receivers 21 to 23 tended to be higher when the location of the active reflector 110 in the Y direction was within ranges of -20 m to -7 m and 7 m to 20 m, than when there was no active reflector 110.

When the location of the active reflector 110 in the Y direction was between -20 m and -7 m, the receiver 21 had higher channel capacities than the receiver 22, and this made it clear that more reflected waves reached the receiver 21 located nearer to the active reflector 110. Also, the receiver 22 had higher channel capacities than the receiver 21 when the location of the active reflector 110 in the Y direction was between 7 m and 20 m, and this made it clear that more reflected waves reached the receiver 22 located nearer to the active reflector 110.

Also, when the active reflector 110 was located in the line-of-sight area 30A on the +Y direction side and the -Y direction side in the roads 2Y, the channel capacities of the receivers 21 and 22 were particularly high when the active reflector 110 was located at -9 m, -8 m, -7 m, 7 m, 8 m, and 9 m in the Y direction. This is likely to be because the fact that the active reflector 110 was positioned in the line-of-sight area 30A on the +Y direction side and the -Y direction side of the roads 2Y, with its reflecting surface 111 directed toward the radio base station 10, and some of the radio waves from the radio base station 10 reached the reflecting surface 111 directly resulted in an increase in the number of radio waves to reach the receivers 21 and 22 located in the non-line-of-sight areas 30B.

Also, as for the receiver 23 located in the line-of-sight area 30A, its tendency to have higher channel capacities when the active reflector 110 was located at -9 m, -8 m, -7 m, 7 m, 8 m, and 9 m in the Y direction than when there was no active reflector 110 was confirmed. As for the receiver 23 located in the line-of-sight area 30A, it is likely that the fact that the active reflector 110 was positioned in the line-of-sight area 30A on the +Y direction side and the -Y direction side in the roads 2Y resulted in an increase in the number of radio waves to reach the receiver 23.

The first simulation therefore made it clear that, by installing the active reflector 110 near the intersection 2I, the number of reflected waves to reach the receivers 21 and 22 positioned in the dead zones could be increased. In particular, the result from route (3) clearly indicated that, by installing the active reflector 110 in the line-of-sight area 30A with its reflecting surface 111 directed toward the radio base station 10, the number of reflected waves to reach the receivers 21 and 22 positioned in the dead zones could be increased significantly.

### <Second simulation>

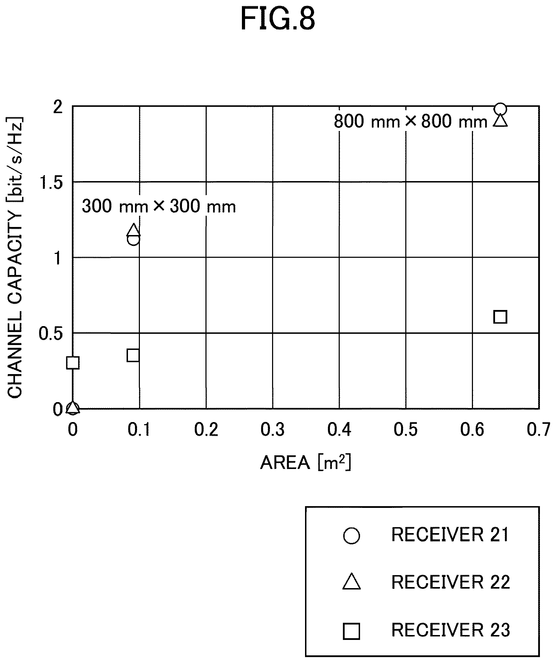

FIG. 8 is a diagram that illustrates the results of a second simulation. In the second simulation, differences in channel capacity (bit/s/Hz) that resulted from changes in the size (area) of the active reflector 110 were calculated. Channel capacity hereinafter refers to the channel capacities (bit/s/Hz) of the receivers 21 to 23 that received radio waves transmitted from the radio base station 10. Note that the locations of the radio base station 10 and the receivers 21 to 23 are the same as in the first simulation.

Also, in the second simulation, the location of the active reflector 110 was the same as when Y = 9 m in route (3) in the first simulation, that is, (X, Y, Z) = (5, 9, 1.5). That is, the active reflector 110 was positioned in the +Y line-of-sight area 30A in the roads 2Y, with its reflecting surface 111 directed toward the radio base station 10. Also, the active reflector 110 shifted its reflecting angle at 1-degree intervals, within a range of ±90 degrees, with respect to the normal vector of the reflecting surface 111 in the XY-plane view.

The result when the area of the active reflector 110 was 0 m² represents the result when no active reflector 110 was installed. When the area of the active reflector 110 was set to 0.09 m² (300 mm × 300 mm) and 0.64 m² (800 mm × 800 mm), the channel capacities of the receivers 21 and 22 increased dramatically compared to when no active reflector 110 was installed. Values larger by approximately 50% to 60% were obtained when the area of the active reflector 110 was 0.64 m² than when it was 0.09 m². Here, only the results obtained when the area of the active reflector 110 was set to 0.09 m² (300 mm × 300 mm) and 0.64 m² (800 mm × 800 mm) are shown, but the channel capacities of the receivers 21 and 22 exhibited the same increasing tendency up to 1.00 m² (1,000 mm × 1,000 mm). Also, when the area of the active reflector 110 was made smaller than 0.09 m², it was confirmed that the channel capacities of the receivers 21 and 22 increased, as long as the area of the active reflector 10 was 0.01 m² (100 mm × 100 mm) or greater, compared to when the active reflector 110 was not installed.

The second simulation made it clear that the larger the size of the active reflector 110, the more the number of reflected waves to reach the receivers 21 and 22 positioned in the dead zones could be increased. It was found that the size of the reflecting surface 111 of the active reflector 110 was preferably 0.01 m² to 1.00 m².

### <Third simulation>

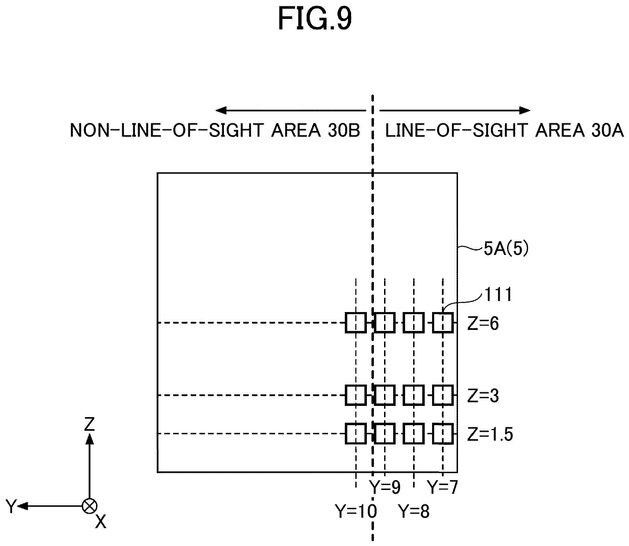

FIG. 9 is a diagram that illustrates the locations of the reflecting surface 111 of the active reflector 110 in a third simulation. In the third simulation, the active reflector 110 was positioned at 12 locations, and the channel capacities of the receivers 21 to 23 were calculated when the active reflector 110 was positioned at each location. FIG. 9 shows the -X outer walls of the building 5A. Note that the locations of the radio base station 10 and the receivers 21 to 23 were the same as in the first simulation. Also, the size of the active reflector 110 was 0.09 m² (300 mm × 300 mm). Also, the active reflector 110 shifted its reflecting angle at 1-degree intervals, within a range of ±90 degrees, with respect to the normal vector of the reflecting surface 111 in the XY-plane view.

Four of the 12 locations of the active reflector 110 were the same as when Y = 7 m, 8 m, 9 m, and 10 m in route (3) in the first simulation, that is, (X, Y, Z) = (5, 7, 1.5), (5, 8, 1.5), (5, 9, 1.5), and (5, 10, 1.5). The other eight had different heights, namely 3 m and 6 m. In other words, the 12 locations were: (X, Y, Z) = (5, 7, 1.5), (5, 7, 3), (5, 7, 6), (5, 8, 1.5), (5, 8, 3), (5, 8, 6), (5, 9, 1.5), (5, 9, 3), (5, 9, 6), (5, 10, 1.5), (5, 10, 3), and (5, 10, 6).

(X, Y, Z) = (5, 7, 1.5), (5, 7, 3), (5, 7, 6), (5, 8, 1.5), (5, 8, 3), (5, 8, 6), (5, 9, 1.5), (5, 9, 3), and (5, 9, 6) were in the line-of-sight area 30A, and the active reflector 110 was positioned in the +Y line-of-sight area 30A in the roads 2Y, with its reflecting surface 111 directed toward the radio base station 10, so that there was a straight line (shortest ray path) that connected between the reflecting surface 111 and the radio base station 10. Since (X, Y, Z) = (5, 10, 1.5), (5, 10, 3), and (5, 10, 6) were in the non-line-of-sight area 30B, the active reflector 110 was positioned in the +Y non-line-of-sight area 30B in the roads 2Y. There was no straight line that connected between the reflecting surface 111 and the radio base station 10. Note that the locations of the line-of-sight area 30A and the non-line-of-sight area 30B shown in FIG. 9 were the locations at X = 5 m. The -X outer wall of the building 5A was located at X = 6 m, so that the reflecting surface 111 was located 1 m further in the -X direction than the -X outer wall of the building 5A.

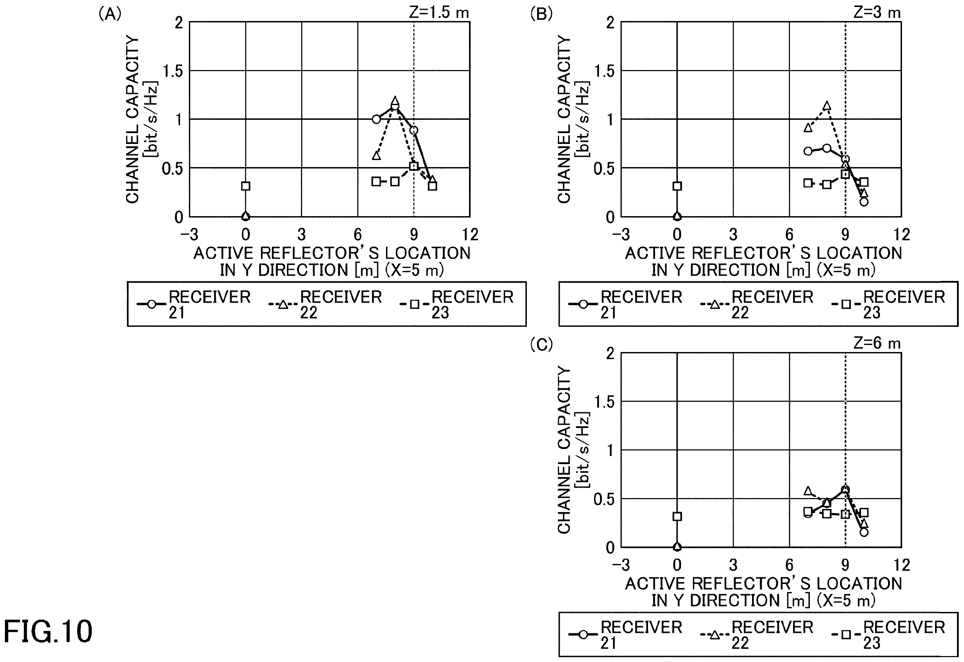

FIG. 10 is a diagram that illustrates the results of the third simulation. In the third simulation, changes in the channel capacities (bit/s/Hz) of the receivers 21 to 23 that resulted from changes in the height of the active reflector 110 and changes in the line-of-sight area 30A/non-line-of-sight area 30B were calculated. Note that Y = 0 m in FIG. 10 indicates the channel capacities of the receivers 21 to 23 when the active reflector 110 was not present in the area 1.
(A) in FIG. 10 shows the channel capacities of the receivers 21 to 23 when the active reflector 110 was located 1.5 m high (Z = 1.5 m). The channel capacities of the receivers 21 and 22 increased significantly when the active reflector 110 was located at Y = 7 m, 8 m, and 9 m, which were in the line-of-sight area 30A, compared to when the active reflector 110 was not present. This is likely to be because, when the active reflector 110 was located in the line-of-sight area 30A, there was a straight line (shortest ray path) that connected between the reflecting surface 111 and the radio base station 10, over the entire reflecting surface 111, and so some of the radio waves from the radio base station 10 reached the reflecting surface 111 directly, and these direct waves were reflected by the reflecting surface 111, thus increasing the number of reflected waves to reach the receivers 21 and 22 located in the dead zones. In particular, the increase in channel capacity was noticeable when the active reflector 110 was located at Y = 8 m, which was close to the boundary between the line-of-sight area 30A and the non-line-of-sight area 30B. When the active reflector 110 was located at Y = 7 m, the channel capacity of the receiver 22 located in the same +Y road 2Y with the active reflector 110 increased more than that of the receiver 21.

Also, although the channel capacities of the receivers 21 and 22 were lower when the active reflector 110 was located at Y = 10 m, which was in the non-line-of-sight area 30B, than when the active reflector 110 was located in the line-of-sight area 30A, they nevertheless increased compared to when there was no active reflector 110. This is likely to be because, although the locations at Y = 10 m were in the non-line-of-sight area 30B, they were still close to the line-of-sight area 30A, and so radio waves reflected by the buildings 5A to 5D were further reflected by the reflecting surface 111, and therefore more reflected waves reached the receivers 21 and 22 located in dead zones.

Also, the channel capacity of the receiver 23 increased when the active reflector 110 was located at Y = 7 m, 8 m, and 9 m, which were in the line-of-sight area 30A, compared to when no active reflector 110 was present. This is likely to be because, since the active reflector 110 was located in the line-of-sight area 30A, radio waves that directly reached the reflecting surface 111 from the radio base station 10 were further reflected by the building 5B or the like, and therefore more reflected waves reached the receiver 23 located in the line-of-sight area 30A. In particular, the increase in channel capacity was noticeable when the active reflector 110 was located at Y = 9 m, which was close to the boundary between the line-of-sight area 30A and the non-line-of-sight area 30B. Also, when the active reflector 110 was located at Y = 10 m, the channel capacity of the receiver 23 was substantially the same as when there was no active reflector 110.

(B) in FIG. 10 shows the channel capacities of the receivers 21 to 23 when the active reflector 110 was located 3.0 m high (Z = 3 m). The channel capacities of the receivers 21 and 22 increased significantly when the active reflector 110 was located at Y = 7 m, 8 m, and 9 m in the line-of-sight area 30A, compared to when the active reflector 110 was not present. In particular, the increase in channel capacity was noticeable when the active reflector 110 was located at Y = 7 m and 8 m, which was closer to the boundary between the line-of-sight area 30A and the non-line-of-sight area 30B. When the active reflector 110 was located at Y = 7 m and 8 m, the channel capacity of the receiver 22 located in the same +Y road 2Y with the active reflector 110 increased more than that of the receiver 21. This is likely to be because, as when the active reflector 110 was located at Z = 1.5 m, and there was a straight line (shortest ray path) that connected between the reflecting surface 111 and the radio base station 10, over the entire reflecting surface 111, and so some of the radio waves from the radio base station 10 reached the reflecting surface 111 directly, and these direct waves were further reflected by the reflecting surface 111, thus increasing the number of reflected waves to reach the receivers 21 and 22 located in the dead zones.

Also, although the channel capacities of the receivers 21 and 22 were lower when the active reflector 110 was located at Y = 10 m, which was in the non-line-of-sight area 30B, than when the active reflector 110 was located in the line-of-sight area 30A, they nevertheless increased compared to when there was no active reflector 110. This is likely to be because, as when the active reflector 110 was located at Z = 1.5 m, although the locations at Y = 10 m were in the non-line-of-sight area 30B, they were still close to the line-of-sight area 30A, and so radio waves reflected by the buildings 5A to 5D were further reflected by the reflecting surface 111, and therefore more reflected waves reached the receivers 21 and 22 located in the dead zones.

Also, the channel capacity of the receiver 23 increased when the active reflector 110 was located at Y = 7 m, 8 m, and 9 m, which were in the line-of-sight area 30A, and when the active reflector 110 was located at Y = 10 m, which was in the non-line-of-sight area 30B, compared to when no active reflector 110 was present. As for the line-of-sight area 30A, the reason may be that, as when the active reflector 110 was located at Z = 1.5 m, since the active reflector 110 was located in the line-of-sight area 30A, radio waves that directly reached the reflecting surface 111 from the radio base station 10 were further reflected by the building 5B or the like, and therefore more reflected waves reached the receiver 23 located in the line-of-sight area 30A. In particular, the increase in channel capacity was noticeable when the active reflector 110 was located at Y = 9 m, which was close to the boundary between the line-of-sight area 30A and the non-line-of-sight area 30B.

Also, when the active reflector 110 was located at Y = 10 m, the channel capacity of the receiver 23 was substantially the same as when the active reflector 110 was located at Y = 7 m and 8 m. This is likely to be because, although the locations at Y = 10 m were in the non-line-of-sight area 30B, they were still close to the line-of-sight area 30A, and so radio waves reflected by the buildings 5A to 5D were further reflected by the reflecting surface 111, and therefore more reflected waves reached the receiver 23 located in the line-of-sight area 30A. As described above, when the active reflector 110 was located at Z = 3 m, the overall tendency was better than when the active reflector 110 was located at Z = 1.5 m.

(C) in FIG. 10 shows the channel capacities of the receivers 21 to 23 when the active reflector 110 was located 6.0 m high (Z = 6 m). The channel capacities of the receivers 21 and 22 increased when the active reflector 110 was located at Y = 7 m, 8 m, and 9 m, which were in the line-of-sight area 30A, compared to when there was no active reflector 110; nevertheless, the increase was smaller than when the active reflector 110 was located at Z = 1.5 m and 3 m. When the active reflector 110 was located at Y = 7 m, the channel capacity of the receiver 22 located in the same +Y road 2Y with the active reflector 110 increased more than that of the receiver 21. This is likely to be because, as when the active reflector 110 was located at Z = 1.5 m and 3 m, there was a straight line (shortest ray path) that connected between the reflecting surface 111 and the radio base station 10, over the entire reflecting surface 111, and so some of the radio waves from the radio base station 10 reached the reflecting surface 111 directly, and these direct waves were further reflected by the reflecting surface 111, thus increasing the number of reflected waves to reach the receivers 21 and 22 located in the dead zones.

Also, although the channel capacities of the receivers 21 and 22 showed higher values when the active reflector 110 was located at Y = 10 m in the non-line-of-sight area 30B than when the active reflector 110 was not present, the increase was small. Although not shown here, the channel capacities of the receivers 21 and 22 were lower when the active reflector 110 was located at Z = 6 m than when the active reflector 110 was located at Z = 5 m.

Also, when the active reflector 110 was located at Y = 7 m, 8 m, 9 m, and 10 m, in all of these cases, the channel capacity of the receiver 23 was substantially the same as when there was no active reflector 110. Although not shown here, the channel capacity of the receiver 23 was lower when the active reflector 110 was located at Z = 6 m, than when the active reflector 110 was located at Z = 5 m. From the above, it was found that the height of the active reflector 110 is preferably 1.5 m or higher and 5 m or lower.

### <Fourth simulation>

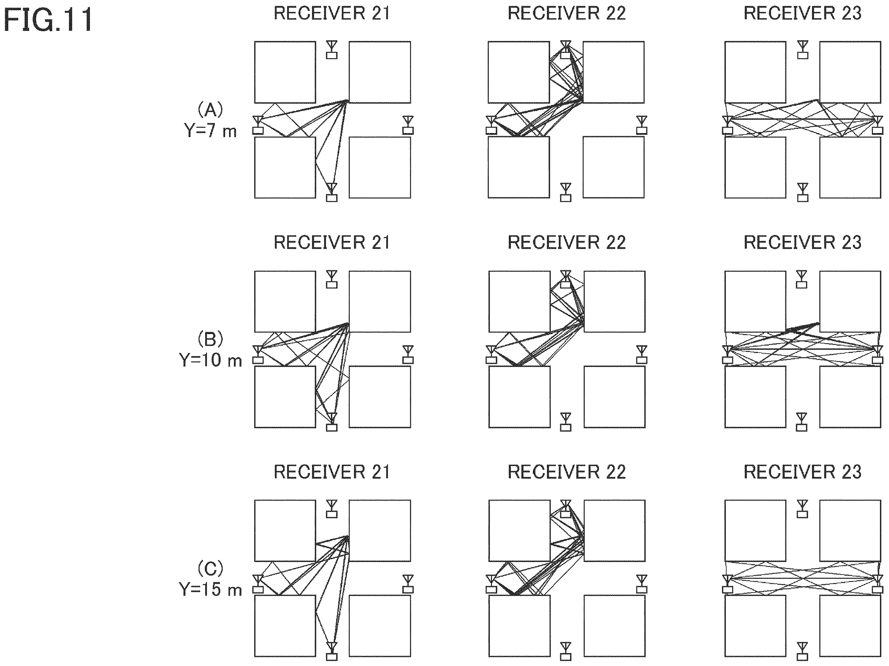

FIG. 11 is a diagram that illustrates the results of a fourth simulation. (A), (B), and (C) of FIG. 11 show the ray paths of direct waves that directly reached the receivers 21, 22, and 23 from the radio base station 10, and radio waves that were reflected on the way and reached the receivers 21, 22, and 23. As shown in (A), (B), and (C) of FIG. 11, the coordinates of the active reflector 110 were (X, Y, Z) = (5, 7, 1.5), (5, 10, 1.5), and (5, 15, 1.5), respectively. The reflecting surface 111 was directed in the -X direction.

The size of the reflecting surface 111 of the active reflector 110 was 300 mm in length and 300 mm in width, and the area was 0.09 m². The active reflector 110 was located at the location of the center of gravity of the reflecting surface 111. Also, the active reflector 110 shifted its reflecting angle at 1-degree intervals, within a range of ±90 degrees, with respect to the normal vector of the reflecting surface 111 in the XY-plane view. Note that, in (A), (B), and (C) of FIG. 11, only the arrangement of the buildings 5A to 5D is shown, and other components including the receivers 21, 22, and 23 and their reference codes are omitted, in order to make the ray paths easier to see.

That is, in (A) of FIG. 11, the active reflector 110 is located in the line-of-sight area 30A. In (B) of FIG. 11, the active reflector 110 is located in the non-line-of-sight area 30B, but is located near the boundary with the line-of-sight area 30A. Also, in (C) of FIG. 11, the active reflector 110 is located in the non-line-of-sight area 30B, and at least 5 m away from the line-of-sight area 30A. This simulation was performed using a simulator for determining ray paths.

As shown in (A) of FIG. 11, it was found that more radio waves were reflected by the active reflector 110 and reached the receiver 21 when the active reflector 110 was located at Y = 7 m. In addition to direct waves, radio waves from the radio base station 10 that were reflected by the outer walls of the buildings 5B and 5C were also incident on the active reflector 110. Also, it was confirmed that some of the radio waves reflected by the active reflector 110 reached the receiver 21 directly, and others reached the receiver 21 after being reflected again by the +X outer wall of the building 5C.

Also, as shown in (A) of FIG. 11, it was found that more of the radio waves reflected by the active reflector 110 reached the receiver 22 when the active reflector 110 was located at Y = 7 m. In addition to direct waves, radio waves that were reflected by the outer walls of the buildings 5B and 5C were incident on the active reflector 110 from the radio base station 10. Also, it was confirmed that some of the radio waves reflected by the active reflector 110 reached the receiver 22 directly, and others reached the receiver 22 after being reflected again by the outer walls of the buildings 5A and 5B.

Also, it was found that, as shown in (A) of FIG. 11, when the active reflector 110 was located at Y = 7 m, the receiver 23 received direct waves from the radio base station 10 and radio waves that were reflected by the outer walls of the buildings 5A to 5D, and received, in addition, radio waves that were reflected by the active reflector 110, although there were few ray paths. In addition to direct waves, radio waves from the radio base station 10 that were reflected by the outer walls of the buildings 5B and 5C were also incident on the active reflector 110. Also, it was confirmed that the radio waves reflected by the active reflector 110 did not reach the receiver 23 directly, but were reflected again by the outer walls of the buildings 5A and 5D and reached the receiver 23.

As shown in (A) of FIG. 11, when the active reflector 110 was located at Y = 7 m, a noticeable effect of obtaining ray paths to the receivers 21 and 22 located in the dead zones was achieved.

As shown in (B) of FIG. 11, when the active reflector 110 was located at Y = 10 m, the active reflector 110 was in the non-line-of-sight area 30B but was close to the boundary between the line-of-sight area 30A and the non-line-of-sight area 30A, and it became clear that more radio waves were reflected by the outer walls of the buildings 5B and 5C, then reflected again by the active reflector 110, and reached the receiver 21. Also, it was confirmed that, among the radio waves that were reflected by the active reflector 110, some of the reflected waves reached the receiver 21 directly, others were reflected again by the +X outer wall of the building 5C and reached the receiver 21, and still others were reflected again by the surface of the roads 2Y, reflected further by the +X outer wall of the building C, and reached the reflector 21. It was also found that the number of reflections increased compared to when the active reflector 110 was located at Y = 7 m.

Also, as shown in (B) of FIG. 11, it became clear that, when the active reflector 110 was located at Y = 10 m, more radio waves were reflected by the outer walls of the buildings 5B and 5C, then reflected again by the active reflector 110, and reached the receiver 22, as in the case with the receiver 21. Also, among the radio waves that were reflected by the active reflector 110, some reached the receiver 22 directly, others were reflected again by the +X outer wall of the building 5B and reached the receiver 22, and still others were reflected by the surface of the roads 2Y and then by the +X outer wall of the building 5B, and reached the receiver 22. Although the active reflector 110 was in the non-line-of-sight area 30B, it was still closer to the receiver 22 than when it was located at Y = 7 m, so that there were more ray paths that directly reached the receiver 22 from the active reflector 110 than when the active reflector 110 was located at Y = 7 m.

Also, as shown in (B) of FIG. 11, regarding the receiver 23 when the active reflector 110 was located at Y = 10 m, it became clear that, in addition to ray paths for direct waves from the radio base station 10 and radio waves that were reflected by the outer walls of the buildings 5A to 5D, ray paths for radio waves that were reflected by the active reflector 110 and reflected again by the building 5B were also formed.

As shown in (B) of FIG. 11, when the active reflector 110 was located at Y = 10 m, ray paths to the receivers 21 and 22 located in the dead zones were obtained, and, furthermore, the number of ray paths to the receiver 23 increased.

As shown in (C) of FIG. 11, it was found that some of the radio waves reflected by the active reflector 110 reached the receiver 21 when the active reflector 110 was located at Y = 15 m. The radio waves from the radio base station 10 did not reach the active reflector 110 directly; instead, they were reflected by the outer walls of the buildings 5A, 5B, and 5C, and incident on the receiver 21. Also, it was confirmed that some of the radio waves reflected by the active reflector 110 reached the receiver 21 directly, and others reached the receiver 21 after being reflected again by the outer walls of the buildings 5A and 5C.

Also, as shown in (C) of FIG. 11, it was found that the radio waves reflected by the active reflector 110 no longer reached the receiver 22 when the active reflector 110 was located at Y = 15 m. Since the active reflector 110 was located in the non-line-of-sight area 30B, the number of reflections of ray paths to reach the receiver 22 increased compared to when the active reflector 110 was located at Y = 7 m and 10 m.

Also, as shown in (C) of FIG. 11, as to the receiver 23 when the active reflector 110 was located at Y = 15 m, direct waves from the radio base station 10 and radio waves that were reflected by the outer walls of the buildings 5A to 5D were incident on the receiver 23, but no ray path was found in which radio waves reflected by the active reflector 110 reached the receiver 23.

As shown in (C) of FIG. 11, when the active reflector 110 was located at Y = 15 m, ray paths to the receivers 21 and 22 located in the dead zones were obtained, but the number of ray paths to the receiver 23 did not increase.

The results shown in (A), (B), and (C) of FIG. 11 thus made it clear that, to increase the number of ray paths to the receiver 23 located in the line-of-sight area 30A while increasing the number of ray paths to the receivers 21 and 22 located in the dead zones, the suitable locations in the Y direction to position the active reflector 110 with its reflecting surface 111 directed toward the radio base station 10 were at Y = 7 m and Y = 10 m.

### <Fifth simulation>

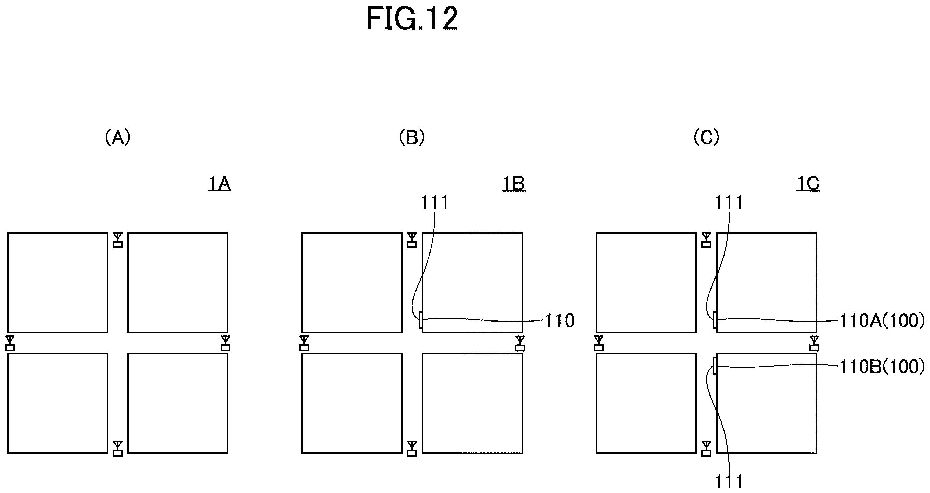

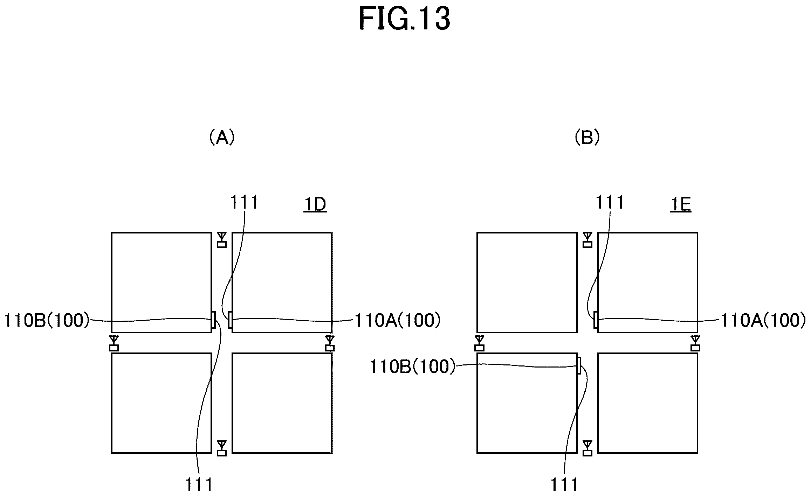

FIG. 12 and FIG. 13 are diagrams that show simulation models. FIG. 12 and FIG. 13 show five simulation models 1A, 1B, 1C, 1D, and 1E. In FIG. 12 and FIG. 13, only the arrangement of the buildings 5A to 5D, and the active reflectors 110, 110A, and 110B are shown, and other components including the receivers 21, 22, and 23 and their reference codes are omitted. Note that the size of the active reflectors 110, 110A, and 110B is 0.09 m² (300 mm × 300 mm). Also, the active reflectors 110, 110A, and 110B shifted their reflecting angles at 5-degree intervals, within a range of ±90 degrees, with respect to the normal vector of the reflecting surface 111 in the XY-plane view. The two active reflectors 110A and 110B in the simulation models 1C to 1E have the same structure as the one active reflector 110 of the simulation model 1B.

The simulation model 1A shown in (A) of FIG. 12 is a simulation model for comparison, and no active reflector 110 is positioned. The simulation model 1B shown in (B) of FIG. 12 includes one active reflector 110 positioned at a location (X, Y, Z) = (5, 7, 1.5). The reflecting surface 111 is directed in the -X direction, and directed toward the radio base station 10.

The simulation model 1C shown in (C) of FIG. 12 includes two active reflectors 110A and 110B, which are positioned at locations (X, Y, Z) = (5, 7, 1.5) and (5, -7, 1.5), respectively. The reflecting surfaces 111 of the two active reflectors 110A and 110B are both directed in the -X direction, and directed toward the radio base station 10. The two active reflectors 110A and 110B are positioned next to each other across the intersection 2I. Since the intersection 2I is in the line-of-sight area 30A, the two active reflectors 110A and 110B are positioned next to each other across the line-of-sight area 30A. The location of the active reflector 110A is the same as the location of the active reflector 110 in the simulation model 1B; the simulation model 1C is structured such that an active reflector 110B is added to the simulation model 1B.

The two active reflectors 110A and 110B make up the reflector system 100, so that the simulation model 1C shown in (C) of FIG. 12 includes the reflector system 100. The active reflector 110A is an example of a first active reflector, and the reflecting surface 111 of the active reflector 110A is an example of a first reflecting surface. Also, the active reflector 110B is an example of a second active reflector, and the reflecting surface 111 of the active reflector 110B is an example of a second reflecting surface.

The simulation model 1D shown in (A) of FIG. 13 includes the reflector system 100. The two active reflectors 110A and 110B are positioned at locations (X, Y, Z) = (5, 7, 1.5) and (-5, 7, 1.5), respectively. The reflecting surface 111 of the active reflector 110A is directed in the -X direction, and directed toward the radio base station 10. The reflecting surface 111 of the active reflector 110B is directed in the +X direction, and faces the reflecting surface 111 of the active reflector 110A across the +Y non-line-of-sight area 30B in the roads 2Y.

The location of the active reflector 110A is the same as the location of the active reflector 110 in the simulation model 1B; the simulation model 1D is structured such that an active reflector 110B is added to the simulation model 1B. The active reflector 110A is an example of the first active reflector, and the reflecting surface 111 of the active reflector 110A is an example of the first reflecting surface. Also, the active reflector 110B is an example of the second active reflector, and the reflecting surface 111 of the active reflector 110B is an example of a second reflecting surface.

The simulation model 1E shown in (B) of FIG. 13 includes the reflector system 100. The two active reflectors 110A and 110B are positioned at locations (X, Y, Z) = (5, 7, 1.5) and (-5, -7, 1.5), respectively. The reflecting surface 111 of the active reflector 110A is directed in the -X direction and directed toward the radio base station 10. The reflecting surface 111 of the active reflector 110B is directed in the +X direction. The reflecting surfaces 111 of the two active reflectors 110A and 110B are positioned to face each other diagonally across the intersection 2I. The intersection 2I is in the line-of-sight area 30A, and so the reflecting surfaces 111 of the two active reflectors 110A and 110B are positioned to face each other diagonally across the line-of-sight area 30A.

The location of the active reflector 110A is the same as the location of the active reflector 110 in the simulation model 1B; The simulation model 1E is structured such that an active reflector 110B is added to the simulation model 1B. The active reflector 110A is an example of a first active reflector, and the reflecting surface 111 of the active reflector 110A is an example of a first reflecting surface. Also, the active reflector 110B is an example of a second active reflector, and the reflecting surface 111 of the active reflector 110B is an example of a second reflecting surface.

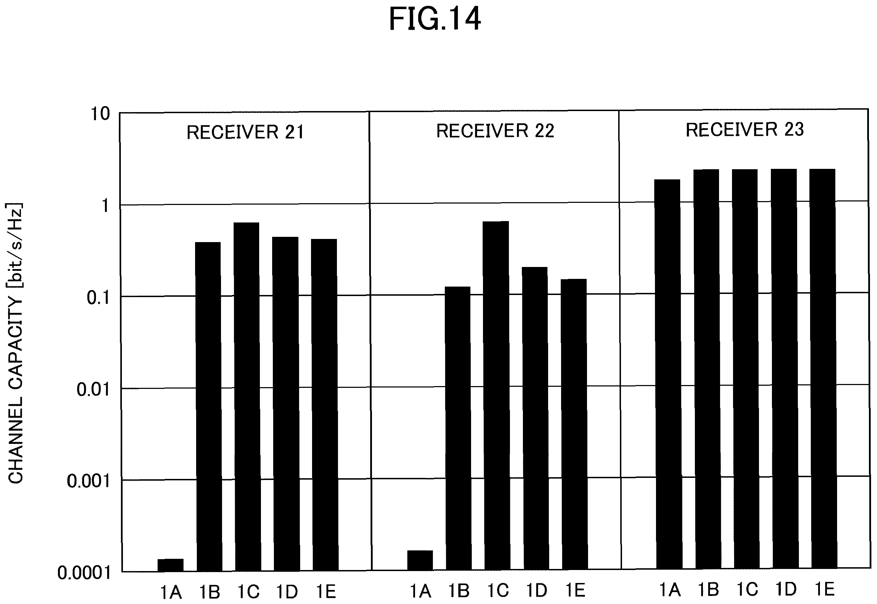

FIG. 14 is a diagram that illustrates the results of a fifth simulation. In the fifth simulation, the channel capacities of the receivers 21 to 23 in the simulation models 1A to 1E were calculated. Here, the channel capacities of the receivers 21 to 23 are shown in a bar graph. For each of the receivers 21 to 23, its channel capacities in the simulation models 1A to 1E are shown from left to right.

As shown in FIG. 14, the channel capacities of the receiver 21 in the simulation models 1B to 1E, in which the active reflectors 110 or 110A and 110B were positioned, increased more significantly than in the simulation model 1A, in which the active reflectors 110, 110A and 110B were not positioned. It was therefore made clear that, by positioning the active reflectors 110, 110A, and 110B at the above locations, the channel capacity of the receiver 21 positioned in a dead zone could be increased significantly.

The channel capacity of the receiver 21 increased the most in the simulation model 1C; the best result was obtained when two active reflectors 110A and 110B were directed toward the radio base station 10 and positioned next to each other across the intersection 2I. Also, in the simulation models 1D and 1E including two active reflectors 110A and 110B, the channel capacity of the receiver 21 increased slightly compared to the simulation model 1B including one active reflector 110. The simulation models 1D and 1E were structured such that the active reflectors 110A and 110B, positioned to face each other or face each other diagonally, were added to the simulation model 1B. It was therefore confirmed that, by adding an active reflector 110B that was not directed toward the radio base station 10, the number of reflected waves to reach the receiver 21 increased.

It was also confirmed that the channel capacity of the receiver 22 in the simulation models 1B to 1E also increased significantly compared to the simulation model 1A, in which the active reflectors 110, 110A, and 110B were not positioned. The channel capacity of the receiver 22 increased the most in the simulation model 1C; the best result was obtained when two active reflectors 110A and 110B were directed toward the radio base station 10 and positioned next to each other across the intersection 2I.

Also, in the simulation models 1D and 1E including two active reflectors 110A and 110B, the channel capacity of the receiver 22 increased slightly compared to the simulation model 1B including one active reflector 110. It was therefore confirmed that, as was the case of the receiver 21, by adding an active reflector 110B that was not directed toward the radio base station 10, the number of reflected waves to reach the receiver 22 increased.

Also, it was confirmed that the channel capacity of the receiver 23 in the simulation models 1B to 1E increased slightly compared to the simulation model 1A, in which the active reflectors 110, 110A, and 110B were not positioned.

As described above, it became clear from the fifth simulation that, by adding a second active reflector 110B, it was possible to increase the channel capacities of the receivers 21 and 22 located in the dead zones compared to the simulation model 1B including only one active reflector 110. That is, it was found that the channel capacities of the receivers 21 and 22 located in the dead zones could be increased by using the reflector system 100 rather than by using the active reflector 110 alone.

Also, although the second active reflector 110 need not be directed toward the radio base station 10, the channel capacities of the receivers 21 and 22 located in the dead zones could be increased more effectively if the second active reflector 110 was directed toward the radio base station 10, as in the simulation model 1C. Therefore, it is inferable that, when using the reflector system 100, it is better to direct a large number of active reflectors 110 toward the radio base station 10.

### <Summary of the first to fifth simulations>

As described above, the first to fifth simulations were performed. Routes (1) to (3) of the first simulation made it clear that the channel capacities of the receivers 21 to 23 increased significantly when the active reflector 110 was positioned near the intersection 2I, compared to when the active reflector 110 was not present, except at X = ±25 m and ±20 m in route (1).

When the active reflector 110 was located near the intersection 2I in routes (1) to (3), the active reflector 110 was located near the boundary between the line-of-sight area 30A and the non-line-of-sight area 30B. The channel capacities of the receivers 21 to 23 increased not only when the active reflector 110 was located in the line-of-sight area 30A, but also when the active reflector 110 was located in the non-line-of-sight area 30B, such as when the active reflector 110 was located at Y = ±7 m, ±9 m, ±10 m in route (2) or at Y = ±10 m in route (3) .

From this, it is likely that the reflecting surface 111 of the active reflector 110 should only be positioned in a boundary area that is located at the boundary between the line-of-sight area 30A and the non-line-of-sight area 30B. The boundary area is a three-dimensional area that is located at the boundary, including the boundary of the line-of-sight area 30A and the non-line-of-sight area 30B, and that has a width in the Y direction. For example, the width of the boundary area in the Y direction is approximately 7 m to 10 m and approximately -7 m to -10 m, at X = 5 m. Also, the active reflector 110 does not have to have the entire reflecting surface 111 located in the boundary area, and it suffices if at least a part of the reflecting surface 111 is located in the boundary area.

From the above, the active reflector 110 has only to be provided such that at least a part of the reflecting surface 111 is located in the boundary area located at the boundary between the line-of-sight area 30A and the non-line-of-sight area 30B. By positioning the active reflector 110 in this manner, the channel capacities of the receivers 21 and 22 located in the dead zones can be increased.

Therefore, it is possible to provide an active reflector 110 and a method of positioning the active reflector 110, whereby the dead zones can be cancelled efficiently. The method of positioning the active reflector 110 is to determine the line-of-sight area 30A and the non-line-of-sight area 30B, and position the active reflector 110 such that at least a part of the reflecting surface 111 is located in the boundary area between the line-of-sight area 30A and the non-line-of-sight area 30B.

Also, when the active reflector 110 was positioned by directing the reflecting surface 111 toward the radio base station 10 as in route (3), the channel capacities of the receivers 21 and 22 located in the dead zones increased compared to when the active reflector 110 was positioned without directing the reflecting surface 111 toward the radio base station 10 as in route (2). From this, it follows that the dead zones can be canceled more efficiently by providing the active reflector 110 such that its reflecting surface 111 is directed toward the radio base station 10.

Also, the second simulation made it clear that the size of the reflecting surface 111 of the active reflector 110 was preferably 0.09 m² to 1.00 m². Therefore, by setting the size of the reflecting surface 111 between 0.09 m² and 1.00 m², the dead zones can be canceled more efficiently.

Also, in the third simulation, the reflecting surface 111 of the active reflector 110 was positioned at 12 locations, which varied in height and the location in the Y-direction, in route (3). As a result of this, the channel capacities of the receivers 21 and 22 located in the dead zones increased when the height of the active reflector 110 was 1.5 m or higher, and 5 m or lower. Also, as to the location in the Y direction, for example, the channel capacities of the receivers 21 and 22 located in the dead zones increased when the reflecting surface 111 was located within a range of Y = 7 m to 10 m, at X = 5. This tendency related to the location in the Y direction was the same as in the first simulation. Therefore, by setting the height of the reflecting surface 111 of the active reflector 110 to 1.5 m or higher and 5 m or lower, the dead zones can be canceled more efficiently.

Also, in the fourth simulation, the channel capacities of the receivers 21 and 22 located in the dead zones increased when the active reflector 110 was located at Y = 7 m and Y = 10 m in the Y-direction, with the reflecting surface 111 directed toward the radio base station 10, and the number of ray paths to reach the receiver 23 in the line-of-sight area 30A increased. This tendency related to the location in the Y direction was the same as in the first simulation.

Also, in the fifth simulation, a reflector system 100 with an addition of a second active reflector 110B was introduced, so that the channel capacities of the receivers 21 and 22 located in the dead zones increased more than in the simulation model 1B including only one active reflector 110. Therefore, it is possible to provide a reflector system 100 whereby the dead zones can be cancelled efficiently.

Also, in the reflector system 100, the channel capacities of the receivers 21 and 22 located in the dead zones increased more when the two active reflectors 110A and 110B were both directed toward the radio base station 10. Therefore, it is possible to provide a reflector system 100 that can cancel the dead zones more efficiently by positioning the two active reflectors 110A and 110B next to each other across the line-of-sight area 30A, with both reflecting surfaces 111 directed toward the radio base station 10. Note that the active reflector 110B, which is an example of a second active reflector, may be positioned next to the active reflector 110A in the non-line-of-sight area 30B.

Also, if the second active reflector 110B is not directed toward the radio base station 10, the second active reflector 110B may then be positioned to face the active reflector 110A across the non-line-of-sight area 30B, or positioned to face the active reflector 110A diagonally across the line-of-sight area 30A, so that the channel capacities of the receivers 21 and 22 located in the dead zones increased compared to when only one active reflector 110 was provided. Therefore, by positioning the second active reflector 110B to face the active reflector 110A across the non-line-of-sight area 30B, or by positioning the second active reflector 110B to face the active reflector 110A diagonally across the line-of-sight area 30A, it is possible to provide a reflector system 100 that can cancel the dead zones more efficiently.

Note that, although examples have been described above in which the line-of-sight area 30A and the non-line-of-sight area 30B are separate in the XY plane, the line-of-sight area 30A and the non-line-of-sight area 30B may be separated vertically, may be separated diagonally with respect to the X-axis, the Y-axis, or the Z-axis. In either case, the active reflector 110 may be installed in the boundary area between the line-of-sight area 30A and the non-line-of-sight area 30B.

Although the reflector system, the active reflector, and the method of positioning the active reflector of the present invention have been described above with reference to example embodiments, the present invention is by no means limited to the embodiments that are described in detail herein, and various modifications and changes can be made without departing from the scope of the claims attached herewith.

This international application is based on and claims priority to Japanese Patent Application No. 2021-081556, filed on May 13, 2021, the entire contents of which are incorporated herein by reference.

### Reference Signs List

- 1: area
- 1A to 1E: simulation model
- 10: radio station
- 11, 12: antenna unit
- 30A: line-of-sight area
- 30B: non-line-of-sight area
- 100: reflector system
- 110, 110A, 110B: active reflector
- 111: reflecting surface
- 112: reflecting elements

## Claims

1. A reflector system comprising:
a first active reflector having a first reflecting surface that is configured to reflect, at a variable reflecting angle, radio waves transmitted from a transmitter, at least a part of the first reflecting surface being provided in a boundary area located at a boundary between a line-of-sight area and a non-line-of-sight area that are formed by one or more obstacles that block the radio waves transmitted from the transmitter; and
a second active reflector having a second reflecting surface that is configured to reflect, at a variable reflecting angle, the radio waves transmitted from the transmitter or the radio waves reflected by the first active reflector, the second reflecting surface being provided in the non-line-of-sight area, or at least a part of the second reflecting surface being provided in the boundary area.

2. The reflector system according to claim 1, wherein the first active reflector is provided such that the first reflecting surface is directed toward the transmitter.

3. The reflector system according to claim 1 or 2, wherein the second active reflector is provided such that the second reflecting surface is directed toward the transmitter or the first reflecting surface.

4. The reflector system according to any one of claims 1 to 3, wherein the first active reflector and the second active reflector are positioned such that the first reflecting surface and the second reflecting surface face each other across the line-of-sight area or the non-line-of-sight area.

5. The reflector system according to aby one of claims 1 to 3,
wherein at least the part of the second reflecting surface of the second active reflector is provided in the boundary area, and
wherein the first active reflector and the second active reflector are positioned such that the first reflecting surface and the second reflecting surface are next to each other across the line-of-sight area or the non-line-of-sight area.

6. The reflector system according to any one of claims 1 to 5, wherein the first reflecting surface or the second reflecting surface is positioned at a height of 1.5 meters or higher and 5 meters or lower above ground.

7. The reflector system according to any one of claims 1 to 6, wherein the first active reflector changes a reflecting angle of the first reflecting surface in accordance with a drive signal, or the second active reflector changes a reflecting angle of the second reflecting surface in accordance with a drive signal.

8. The reflector system according to any one of claims 1 to 7,
wherein the transmitter transmits the radio waves by using multiple-input and multiple-output (MIMO) method, and
wherein the first active reflector and the second active reflector reflect MIMO radio waves on the first reflecting surface and the second reflecting surface.

9. The reflector system according to any one of claims 1 to 8, wherein the first reflecting surface and the second reflecting surface are 0.01 square meters or more and 1 square meter or less in size.

10. An active reflector, comprising a reflecting surface that is configured to reflect, at a variable reflecting angle, radio waves transmitted from a transmitter, at least a part of the reflecting surface being provided in a boundary area located at a boundary between a line-of-sight area and a non-line-of-sight area that are formed by one or more obstacles that block the radio waves transmitted from the transmitter.

11. The active reflector according to claim 10, wherein the reflecting surface is directed toward the transmitter.

12. The active reflector according to claim 10 or 11, wherein the reflecting surface is positioned at a height of 1.5 meters or higher and 5 meters or lower above ground.

13. The active reflector according to any one of claims 10 to 12,
wherein the transmitter transmits the radio waves by using multiple-input and multiple-output (MIMO) method, and,
wherein the reflecting surface reflects MIMO radio waves on the reflecting surface.

14. The active reflector according to any one of claims 10 to 13, wherein the reflecting surface is 0.01 square meters or more and 1 square meter or less in size.

15. A method of positioning an active reflector having a reflecting surface that is configured to reflect, at a variable reflecting angle, radio waves transmitted from a transmitter, the method comprising:
positioning the active reflector such that at least a part of the reflecting surface is provided in a boundary area located at a boundary between a line-of-sight area and a non-line-of-sight area that are formed by one or more obstacles that block the radio waves transmitted from the transmitter.
